# EUROPÄISCHE PATENTSCHRIFT

(11) **EP 2 742 643 B1**
(45) Veröffentlichungstag und Bekanntmachung des Hinweises auf die Patenterteilung: **07.03.2018**
(21) Anmeldenummer: 12791733.4
(22) Anmeldetag: 14.11.2012
(51) Int. Cl.: H04L 9/00

(54) **VORRICHTUNG UND VERFAHREN ZUM ENTSCHLÜSSELN VON DATEN**
DEVICE AND METHOD FOR DECRYPTING DATA
DISPOSITIF ET PROCÉDÉ DE DÉCRYPTAGE DE DONNÉES

(30) Priorität: 06.12.2011 DE 102011087804
(43) Veröffentlichungstag der Anmeldung: 18.06.2014
(73) Patentinhaber: Siemens Aktiengesellschaft, 80333 München (DE)
(72) Erfinder: MEYER, Bernd, 81739 München (DE); SCHAFHEUTLE, Marcus, 81539 München (DE)
(86) Internationale Anmeldenummer: PCT/EP2012/072598
(87) Internationale Veröffentlichungsnummer: WO 2013/083375

(56) Entgegenhaltungen:
- DE-A1- 10 120 288
- US-A1- 2011 110 525
- Ingrid Biehl ET AL: "Ensuring the integrity of agent-based computations by short proofs" In: "Mobile Agents", 1. Januar 1998 (1998-01-01), Springer-Verlag, Berlin/Heidelberg, XP055057973, ISBN: 978-3-54-064959-5 Bd. 1477, Seiten 183-194, DOI: 10.1007/BFb0057658, in der Anmeldung erwähnt Seiten 1-3,6

## Beschreibung

Die vorliegende Erfindung betrifft die Entschlüsselung von Daten durch eine kryptographisch und/oder physikalisch gesicherte Vorrichtung.

In der theoretischen Kryptographie wird die Sicherheit eines kryptographischen Verfahrens herkömmlicherweise an Hand des Ein- und Ausgabeverhaltens bewertet. Dabei bekommt ein Angreifer oder Hacker lediglich die Eingabe und/oder die Ausgabe der kryptographisch bearbeiteten Daten zu sehen und hat dann unter Kenntnis des eingesetzten Verfahrens Rückschlüsse auf den verwendeten kryptographischen Schlüssel ziehen.

Insbesondere laufen die Rechenschritte des kryptographischen Verfahrens in einer geschützten Umgebung ab, auf die der Angreifer keinen Zugriff hat. In der Praxis kann eine solche gesicherte Rechenumgebung mit einem Security-Token, beispielsweise mit einer Chipkarte oder einem Dongle, nachgebildet werden. Das Security-Token weist vielfältige Schutzmaßnahmen in Hard- und Software auf, welche es ermöglichen, einerseits als vertraulichen und manipulationsgeschützten Speicher für geheime Daten, wie beispielsweise Schlüsselmaterial, zu dienen und andererseits Teile der zu schützenden Anwendung des Zielsystems direkt in der geschützten Umgebung des Tokens auszuführen. Allerdings sind alle in der Praxis gebräuchlichen Security-Token bezüglich Speichergröße an Daten- und Programmspeicher als auch Leistung und Performance der zur Verfügung stehenden Rechenkapazität stark eingeschränkt. Daher werden häufig nur die kryptographischen Kernfunktionen in einem Security-Token umgesetzt. Der größte Teil der Applikation oder des Programms läuft dann auf einem Computer-System mit keinem oder deutlich geringerem Schutzniveau.

Es existieren auch Ansätze, die es ermöglichen, leistungsfähigere Computer-Systeme physikalisch zu schützen. Allerdings sind der Aufwand für diese Maßnahmen und die zusätzlichen Kosten bei der technischen Umsetzung in Relation zu den erreichbaren Schutzniveaus und den geplanten Anwendungen derart hoch, dass solche Verfahren nur für Anwendungen mit militärischer Sicherheit eingesetzt werden.

Wenn ein kryptographischer Algorithmus, der eine geheime Information benötigt, auf einem System ausgeführt werden muss, welches es dem Angreifer erlaubt, den Ablauf des Algorithmus zu verfolgen, sind weitere Schutzmechanismen nötig, um gegen bestimmte Klassen von Angriffen geschützt zu sein. Ist es dem Angreifer beispielsweise möglich, physikalische Eigenschaften der Rechenumgebung, wie beispielsweise Laufzeit, dynamische Stromaufnahme oder elektromagnetische Abstrahlung während des Rechenvorgangs zu messen, so sind Maßnahmen zur Abwehr so genannter Seitenkanalangriffe wichtig.

Besteht die Rechenumgebung für das kryptographische Verfahren aus einem Computer-System, das keinen physikalischen Schutz bietet, dann hat der Angreifer vollständige Kontrolle über die ausgeführten Rechenschritte und die verarbeiteten Daten. In diesem Fall muss der Algorithmus so implementiert werden, dass es dem Angreifer, obwohl er die Ausführung des Algorithmus bis in das letzte Detail nachvollziehen kann, nicht möglich ist, diesen zu verstehen oder das verarbeitete Geheimnis zu extrahieren. Eine derartige Implementierung eines Algorithmus nennt man obfusziert.

Verfahren zur Bereitstellung einer sicheren Berechnungsumgebung reichen von reinen Software-Lösungen bis zu speziell gefertigter Hardware oder Kombinationen aus Soft- und Hardware. Dabei wird zur Realisierung der sicheren Berechnungsumgebung zumindest eine Sicherheitseinrichtung eingesetzt, welche physikalischen und/oder kryptographischen Schutz bietet.

Reine Software-Lösungen werden eingesetzt, wenn keine weiteren Schutzfunktionen durch die Hardware des Computersystems zur Verfügung stehen oder dieses aus Kostengründen nicht gewünscht ist. Das Programm, welches auf dem Computer-System ausgeführt werden soll, kann durch geeignete Code-Transformationen, so genannte Code-Obfuskation, so verändert werden, dass das Reverse-Engineering durch einen Angreifer erschwert beziehungsweise bestenfalls verhindert wird. Spezielle Techniken, so genannte White-Box-Kryptographie, können zum Schutz von geheimem Schlüsselmaterial in der Software verwendet werden. Das erzielbare Sicherheitsniveau ist im Vergleich zu Techniken mit Hardware-Schutzmaßnahmen gering und die Transformation des Codes ist normalerweise mit erheblichen Performance-Einbußen und einem deutlich größeren Programm- und Speicherplatzbedarf verbunden.

Bei den Lösungsansätzen mit Hardware-Unterstützung wird in den meisten Anwendungsfällen zur Bereitstellung eines sicheren Computer-Systems ein Security-Token eingesetzt. Ein solches Security-Token enthält spezielle Schutzmechanismen in Hardware, wie beispielsweise Sensoren für Temperatur, Betriebsspannung, Angriffe mittels Laser-Blitzen, verschlüsselte Busse und Speicher, Rauschgeneratoren, Random-Wait-State Generatoren, Schilde zum Schutz gegen Probing mittels Nadeln, spezielle Chip-Entwurfsstile usw. Security-Token sind einfache Computer-Systeme, bestehend aus RAM, einem nichtflüchtigen Speicher (üblicherweise Flash oder EEPROM), einer CPU und IO-Interfaces (UART, SPI, USB usw.) und bieten ein vergleichsweise hohes Sicherheitsniveau gegen Angriffe. Häufig enthalten die Sicherheits-Token zusätzliche Hardware zur effizienten Berechnung kryptographischer Verfahren (DES-, AES-Beschleuniger, Langzahlrechenwerke). Die Leistungsfähigkeit der Security-Token ist normalerweise sehr eingeschränkt bezüglich Speichergröße, CPU-Geschwindigkeit und Datendurchsatz der Schnittstellen, so dass nur kleine, sicherheitsrelevante Teile einer Applikation innerhalb des Tokens ausgeführt werden können.

Alternativ sind auch speziell für Sicherheitsanwendungen hergestellte Single-Chip-Controller am Markt verfügbar, welche beispielsweise in Embedded-Anwendungen eingesetzt werden können. Diese Computer-Systeme sind üblicherweise etwas leistungsfähiger als Security-Token, verteuern aber das Design eines Produktes erheblich.

Möglich ist auch, das ganze Gerät durch spezielle Maßnahmen zum Design des Gehäuses zu schützen. Solche Maßnahmen reichen von einfachen Schaltern zum Erkennen des Öffnens eines Gehäuses, Spezialgehäusen, Bohrschutzfolien, speziellen Leiterplatten bis hin zu Fertigungstechniken wie Vergießen oder Versiegeln. Die Geräte können eine aktive Sensorik besitzen, um Manipulationsversuche erkennen und darauf reagieren zu können und benötigen dazu eine unterbrechungsfreie Stromversorgung mittels einer Batterie. Innerhalb eines solchen Gerätes kann ein leistungsfähiges Computer-System bestehend aus Standardkomponenten verwendet werden. Die entsprechenden Entwicklungs- und Fertigungsaufwände solcher Systeme sich jedoch hoch, so dass solche Schutzmaßnahmen üblicherweise nur bei militärischen Anwendungen vorkommen. Zusätzlich sind organisatorische Maßnahmen zum regelmäßigen Tausch der Batterie notwendig, um die Verfügbarkeit der Geräte sicherstellen zu können.

Homomorphe Verschlüsselungsfunktionen waren bis vor wenigen Jahren ein lediglich in der theoretischen Kryptographie diskutiertes Konzept, welches es ermöglichen soll, alleine durch Rechenoperationen auf verschlüsselten Daten eine sichere Berechnungsumgebung für Programme auf ungeschützten Computer-Systemen zu realisieren.

Im Jahr 2009 hat Craig Gentry in seiner Doktorarbeit erstmals unter bestimmten kryptographischen Komplexitätsannahmen eine Methode zur Realisierung von homomorphen Verschlüsselungsfunktion mit allen zur Durchführung beliebiger Berechnungen notwendigen Eigenschaften beschrieben (siehe [1]). Die beschriebenen Techniken wurden zwischenzeitlich unter anderem von Shai Halevi und Nigel Smart weiterentwickelt, und ihre Performance wurde verbessert (siehe [2] bis [4]).

US 2011/0110525 A1 offenbart ein Verfahren, welches Verschlüsseln von Informationen gemäß einem Verschlüsselungsschema, das einen öffentlichen Schlüssel verwendet, aufweist. Das Verfahren weist des Weiteren das Verschlüsseln einer Mehrzahl von Instanzen eines geheimen Schlüssels auf, wobei jeder mit mindestens einer zusätzlichen Instanz des öffentlichen Schlüssels verschlüsselt ist. Das Verfahren weist des Weiteren das Senden der verschlüsselten Daten und der Mehrzahl von verschlüsselten Instanzen des geheimen Schlüssels zu einem Ziel, das Empfangen eines verschlüsselten Ergebnisses vom Ziel und Entschlüsseln des verschlüsselten Ergebnisses auf. Ein weiteres Verfahren umfasst das Empfangen einer Mehrzahl von verschlüsselten geheimen Schlüsseln und Informationen auf, die eine Funktion beschreiben, die an Daten durchgeführt wird. Dieses Verfahren weist des Weiteren das Umwandeln der Informationen in eine Schaltung um, die eingerichtet ist, die Funktion an den Daten durchzuführen. Das Verfahren weist des Weiteren das Anlegen der Daten an die Eingänge der Schaltung und die Auswertung der Daten auf, unter Verwendung wiederum der Mehrzahl von verschlüsselten geheimen Schlüsseln.

DE 101 20 288 A1 offenbart ein Abspielgerät für Musikdateien, bei dem Abrechnungsdaten erzeugt werden. Die Mediendatei ist mit zufälligen Schlüsseln verschlüsselt, die wiederum mit dem öffentlichen Schlüssel des Nutzers verschlüsselt sind.

Es ist daher eine Aufgabe der vorliegenden Erfindung, eine sichere Berechnungsumgebung mit hoher Sicherheit aus verfügbaren Standardkomponenten kostengünstig zu realisieren.

Demgemäß wird eine Vorrichtung zum Entschlüsseln von Daten vorgeschlagen, welche eine Anzahl von durch zumindest eine Sicherungseinrichtung gesicherten Mitteln mit zumindest einem Empfangsmittel und einem Entschlüsselungsmittel umfasst. Das Empfangsmittel ist zum Empfangen von mittels einer homomorphen Verschlüsselungsfunktion verschlüsselten Berechnungsdaten eingerichtet. Das Entschlüsselungsmittel ist zum Entschlüsseln der verschlüsselten Berechnungsdaten durch Ausführung der Inversen der homomorphen Verschlüsselungsfunktion auf die verschlüsselten Berechnungsdaten unter Verwendung eines der homomorphen Verschlüsselungsfunktion zugeordneten privaten Schlüssels eingerichtet.

Die Sicherheitseinrichtung dient zur Realisierung einer sicheren Berechnungsumgebung. Dabei bietet die Sicherungseinrichtung insbesondere physikalischen und/oder kryptographischen Schutz. Die Sicherungseinrichtung kann als reine Software-Lösung, als eine speziell gefertigte Hardware oder als eine Kombination aus Software und Hardware gefertigt sein. Dabei schützt die Sicherungseinrichtung insbesondere gegen Seitenkanalangriffe.

Bei den mittels der homomorphen Verschlüsselungsfunktion verschlüsselten Berechnungsdaten kann es sich um Ergebnisse von Berechnungen eines mittels einer homomorphen Verschlüsselungsfunktion transformierten Programms handeln.

Durch die Verwendung der homomorphen Verschlüsselungsfunktion für die Berechnung der verschlüsselten Berechnungsdaten ist es möglich, die Berechnung auf einem ungeschützten Computer-system zu realisieren.

Die verschlüsselten Berechnungsdaten werden von einer Einrichtung, beispielsweise einem ungeschützten Computer aus

Standardkomponenten, berechnet. Dabei wendet der ungeschützte Computer das mittels der homomorphen Verschlüsselungsfunktion transformierte Programm auf Eingangsdaten zur Bereitstellung der verschlüsselten Berechnungsdaten an. Die verschlüsselten Berechnungsdaten sind dann mittels der homomorphen Verschlüsselungsfunktion verschlüsselt. Vorteilhafterweise ist es durch die Eigenschaften der homomorphen Verschlüsselungsfunktion möglich, den rechenintensiven Teil des Programms auf dem ungeschützten Computer oder Computersystem aus Standardkomponenten auszuführen. Damit muss dieser rechenintensive Teil der Ausführung des Programms nicht auf der Entschlüsselungsvorrichtung mit der zur Entschlüsselung eingerichteten sicheren Berechnungsumgebung ausgeführt werden. Die Sicherheit des Programms oder der Anwendung wird durch die kryptographischen Eigenschaften der homomorphen Verschlüsselungsfunktion garantiert und benötigt keine speziellen Hardware-Schutzmaßnahmen durch das Computersystem. Insbesondere bestehen nicht die für die Entschlüsselungsvorrichtung, beispielsweise einen Security-Token, üblichen Leistungseinschränkungen durch Speicher- und Programmgröße oder Leistungsfähigkeit der CPU der Entschlüsselungsvorrichtung. Das transformierte Programm führt alle Berechnungen verschlüsselt durch. Die verschlüsselten Berechnungsdaten werden der Entschlüsselungsvorrichtung übergeben und dabei von dem Empfangsmittel der Entschlüsselungsvorrichtung empfangen. Die abschließende Entschlüsselung wird auf der geschützten Entschlüsselungsvorrichtung durchgeführt, weil die ungeschützte Einrichtung, hier beispielsweise das ungeschützte Computersystem, keine ausreichenden Maßnahmen zum Schutz des geheimen Schlüssels der homomorphen Verschlüsselungsfunktion, welcher zur Entschlüsselung benötigt wird, zur Verfügung stellen kann.

Die vorliegende Lösung ist sehr kostengünstig, da für die sichere Berechnungsumgebung, hier die Entschlüsselungsvorrichtung, nur geringere Ressourcen, insbesondere Rechenleistung und Speicherkapazität notwendig sind als für die Einrichtung zur Anwendung des transformierten Programms. Dabei werden die rechenintensiven Aufgaben der Anwendung des transformierten Programms durch die ungesicherte oder wenig gesicherte Einrichtung durchgeführt, die mit größeren Ressourcen ausgestattet ist, aber mit weniger kostenintensiven Sicherheitsmaßnahmen. Demgegenüber hat die Entschlüsselungsvorrichtung ein höheres Sicherheitsniveau, braucht aber für den verbleibenden Schritt der Entschlüsselung deutlich weniger Ressourcen als die Einrichtung zur Anwendung des transformierten Programms.

Eine solche homomorphe Verschlüsselungsfunktion ermöglicht es, verschlüsselt vorliegende Werte einer geeigneten mathematischen Struktur zu addieren, subtrahieren und zu multiplizieren, so dass das Ergebnis der Berechnungen wiederum verschlüsselt vorliegt. Bei der Berechnung liegen zu keinem Zeitpunkt Zwischenergebnisse oder andere Informationen über die verknüpften Werte unverschlüsselt für einen Angreifer zugänglich vor und die Durchführung dieser Rechenschritte erfordert auch nicht die Kenntnis von geheimem Schlüsselmaterial. Das heißt, dass die Berechnungen auf einem ungesicherten Computer-System durchgeführt werden können, ohne die verarbeiteten Daten zu gefährden bzw. offen zu legen.

Mit Hilfe der mathematischen Operationen Addition, Subtraktion und Multiplikation ist es möglich, auf sichere und geheime Weise Polynomfunktionen von verschlüsselten Werten zu berechnen. Durch die Polynomfunktionen können dann wiederum beliebige Berechnungen von Computer-Systemen beschrieben werden. Wenn das Ergebnis der Berechnung letztendlich als verschlüsselter Wert vorliegt, ist nur der legitime Empfänger, welcher den privaten Schlüssel der homomorphen Verschlüsselungsfunktion besitzt, in der Lage, die berechneten Werte zu entschlüsseln.

Bei einer Ausführungsform umfassen die mittels der zumindest einen Sicherungseinrichtung gesicherten Mittel ein Speichermittel. Das Speichermittel ist dazu eingerichtet, ein Programm zu Berechnung der Inversen der homomorphen Verschlüsselungsfunktion zu speichern und das gespeicherte Programm der Inversen der homomorphen Verschlüsselungsfunktion dem Entschlüsselungsmittel bereitzustellen. Das Speichermittel ist beispielsweise ein Flash-Speicher oder ein RAM-Speicher.

Bei einer weiteren Ausführungsform ist das Speichermittel weiter dazu eingerichtet, den der homomorphen Verschlüsselungsfunktion zugeordneten privaten Schlüssel zu speichern und den gespeicherten privaten Schlüssel dem Entschlüsselungsmittel bereitzustellen.

Bei einer weiteren Ausführungsform ist das Entschlüsselungsmittel fest verdrahtet ausgebildet. Beispielsweise ist das Entschlüsselungsmittel als ein integrierter Schaltkreis (IC oder ASIC) oder als ein Field-Programmable-Gate-Array (FPGA) ausgebildet.

Bei einer weiteren Ausführungsform ist die Vorrichtung ein Sicherheits-Token, ein USB-Token, eine Smart-Card, ein geschützter Server oder ein geschützter Rechner.

Des Weiteren wird ein System mit einer Einrichtung, welche ein Anwendungsmittel zum Anwenden des mittels der homomorphen Verschlüsselungsfunktion transformierten Programms auf Eingangsdaten zur Bereitstellung der verschlüsselten Berechnungsdaten und ein Übertragungsmittel zum Übertragen der verschlüsselten Berechnungsdaten aufweist, und mit einer wie oben erläuterten Vorrichtung zum Entschlüsseln der übertragenen, verschlüsselten Berechnungsdaten vorgeschlagen.

Bei einer Ausführungsform des Systems ist die Einrichtung ein ungeschützter Rechner oder ein ungeschützter Server.

Bei einer weiteren Ausführungsform sind das Übertragungsmittel der Einrichtung und das Empfangsmittel der Vorrichtung dazu eingerichtet, ein vorbestimmtes Schnittstellenprotokoll zur Übertragung der verschlüsselten Berechnungsdaten auszuführen.

Durch das vorbestimmte Schnittstellenprotokoll können die verschlüsselten Berechnungsdaten gezielt und in vorbestimmter Weise von der Einrichtung an die Entschlüsselungsvorrichtung übertragen werden.

Bei einer weiteren Ausführungsform ist die Einrichtung derart mit Ressourcen ausgestattet, um das transformierte Programm innerhalb einer vorbestimmten Zeitdauer vollständig auszuführen, in welcher die Vorrichtung das transformierte Programm nicht vollständig ausführen kann.

Die Ressourcen umfassen dabei insbesondere die bereitgestellte Rechenleistung der CPU sowie die Speicherkapazität des Speichers oder der Speicher der Einrichtung.

Bei einer weiteren Ausführungsform weist die Einrichtung ein Schutzmittel auf, welches dazu eingerichtet ist, das transformierte Programm vor Manipulation zu schützen. Das Schutzmittel kann eine manipulationsfreie Ausführung des transformierten Programms garantieren.

Bei einer weiteren Ausführungsform ist das Schutzmittel dazu eingerichtet, einen Nachweis über die korrekte Ausführung des transformierten Programms durch das Anwendungsmittel, insbesondere mittels Probabilistically-Checkable-Proofs (PCP), zu erstellen (siehe [5] bis [7]).

Bei dieser Ausführungsform kann der Schutzumfang des Programms auf der leistungsfähigen Einrichtung, welche die homomorph verschlüsselten Berechnungen ausführt, dahingehend erweitert werden, dass das Programm vor Manipulationen geschützt wird. Dazu kann das Programm auf der leistungsfähigen, aber ansonsten ungeschützten Einrichtung, beispielsweise dem ungeschützten Computersystem, insbesondere so erweitert werden, dass bei der Anwendung des Programms gleichzeitig Nachweise über die korrekte Durchführung der Berechnung erstellt werden. Dazu werden insbesondere Probabilistically-Checkable-Proofs (PCP) eingesetzt. PCP-Beweise haben die Eigenschaft, dass sie sehr effizient überprüft werden können. Die Überprüfung des Nachweises über die korrekt ausgeführte Berechnung auf der Einrichtung kann dann wiederum in der Entschlüsselungsvorrichtung erfolgen. Vorzugsweise nur wenn der Nachweis über die Berechnung als gültig akzeptiert wird, wird die Entschlüsselungsvorrichtung die homomorph verschlüsselten Berechnungsdaten entschlüsseln.

Das jeweilige Mittel, beispielsweise das Empfangsmittel, das Entschlüsselungsmittel oder das Schutzmittel, kann hardwaretechnisch oder auch softwaretechnisch implementiert sein. Bei einer hardwaretechnischen Implementierung kann das jeweilige Mittel als Vorrichtung oder als Teil einer Vorrichtung, zum Beispiel als Computer oder als Microprozessor oder als IC, ASIC oder FPGA ausgebildet sein. Bei einer softwaretechnischen Implementierung kann das jeweilige Mittel als Computerprogrammprodukt, als eine Funktion, als eine Routine, als Teil eines Programmcodes oder als ausführbares Objekt ausgebildet sein.

Ferner wird ein Verfahren zum Entschlüsseln von Daten mittels einer durch zumindest eine Sicherheitseinrichtung gesicherten Vorrichtung vorgeschlagen, welches die folgenden Schritte aufweist:
- Empfangen von mittels einer homomorphen Verschlüsselungsfunktion verschlüsselten Berechnungsdaten, und
- Entschlüsseln der verschlüsselten Berechnungsdaten durch Ausführung der Inversen der homomorphen Verschlüsselungsfunktion auf die verschlüsselten Berechnungsdaten unter Verwendung eines der homomorphen Verschlüsselungsfunktion zugeordneten privaten Schlüssels.

Weiterhin wird ein Computerprogrammprodukt vorgeschlagen, welches auf einer programmgesteuerten Einrichtung die Durchführung des wie oben erläuterten Verfahrens zum Entschlüsseln von Daten mittels einer durch zumindest eine Sicherheitseinrichtung gesicherten Vorrichtung veranlasst. Die programmgesteuerte Einrichtung ist insbesondere eine Entschlüsselungsvorrichtung, wie ein Sicherheits-Token.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: ein Blockschaltbild eines ersten Ausführungsbeispiels einer Entschlüsselungsvorrichtung;
- Fig. 2: ein Blockschaltbild eines zweiten Ausführungsbeispiels einer Entschlüsselungsvorrichtung;
- Fig. 3: ein Blockschaltbild eines ersten Ausführungsbeispiels eines Systems mit einer Berechnungseinrichtung und einer Entschlüsselungsvorrichtung;
- Fig. 4: ein Blockschaltbild eines zweiten Ausführungsbeispiels eines Systems mit einer Berechnungseinrichtung und einer Entschlüsselungsvorrichtung;
- Fig. 5: ein Blockschaltbild eines dritten Ausführungsbeispiels eines Systems mit einer Berechnungseinrichtung und einer Entschlüsselungsvorrichtung;

- Fig. 6: ein Ablaufdiagramm eines ersten Ausführungsbeispiels eines Verfahrens zum Entschlüsseln von Daten; und
- Fig. 7: ein Ablaufdiagramm eines zweiten Ausführungsbeispiels eines Verfahrens zum Entschlüsseln von Daten.

In den Figuren sind gleiche oder funktionsgleiche Elemente mit denselben Bezugszeichen versehen worden, sofern nichts anderes angegeben ist.

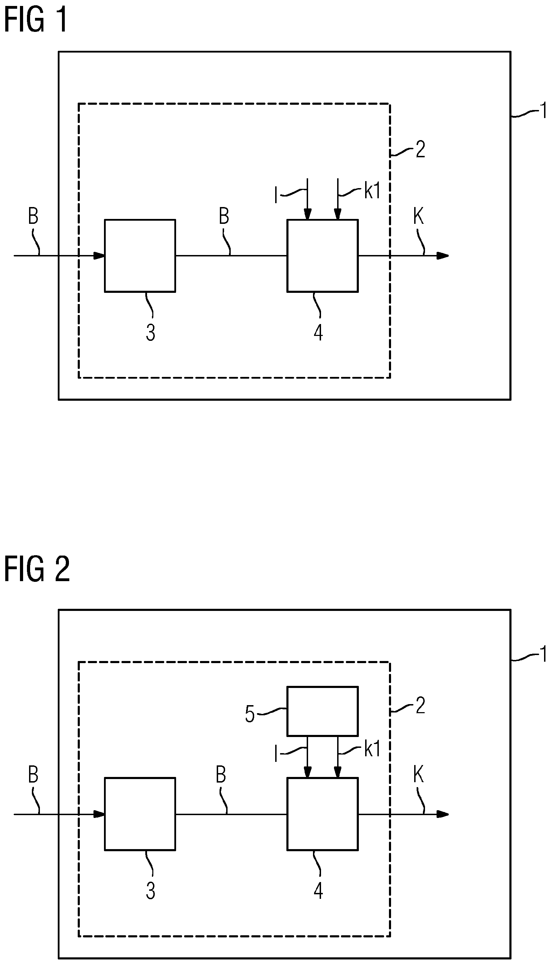

In der Fig. 1 ist ein Blockschaltbild eines ersten Ausführungsbeispiels einer kryptographisch und/oder physikalisch geschützten Entschlüsselungsvorrichtung 1 dargestellt.

Die Entschlüsselungsvorrichtung 1 ist beispielsweise ein Sicherheits-Token, ein USB-Token, eine Smart-Card, ein geschützter Server oder ein geschützter Rechner.

Die Mittel 3, 4 der Vorrichtung 1 sind durch zumindest eine Sicherungseinrichtung 2 gegen Manipulation, Ausspähen und/oder Hacker-Angriffe geschützt.

Die Entschlüsselungsvorrichtung 1 hat ein Empfangsmittel 3 und ein Entschlüsselungsmittel 4. Das Empfangsmittel 3 ist dazu geeignet, verschlüsselte Berechnungsdaten B zu empfangen, die mittels einer homomorphen Verschlüsselungsfunktion f verschlüsselt sind.

Bei den mittels der homomorphen Verschlüsselungsfunktion f verschlüsselten Berechnungsdaten B kann es sich um Ergebnisse von Berechnungen eines mittels der homomorphen Verschlüsselungsfunktion f transformierten Programms P handeln.

Mit anderen Worten kann ein Programm S unter Verwendung der homomorphen Verschlüsselungsfunktion f in ein transformiertes Programm P transformiert werden. Die durch das transformierte Programm P berechneten Berechnungsdaten B sind verschlüsselt und zwar durch die homomorphe Verschlüsselungsfunktion f.

Das Entschlüsselungsmittel 4 ist dazu geeignet, die empfangenen verschlüsselten Berechnungsdaten B durch Ausführung der Inversen I der homomorphen Verschlüsselungsfunktion f auf die verschlüsselten Berechnungsdaten B unter Verwendung eines der homomorphen Verschlüsselungsfunktion f zugeordneten privaten Schlüssels k1 zu entschlüsseln.

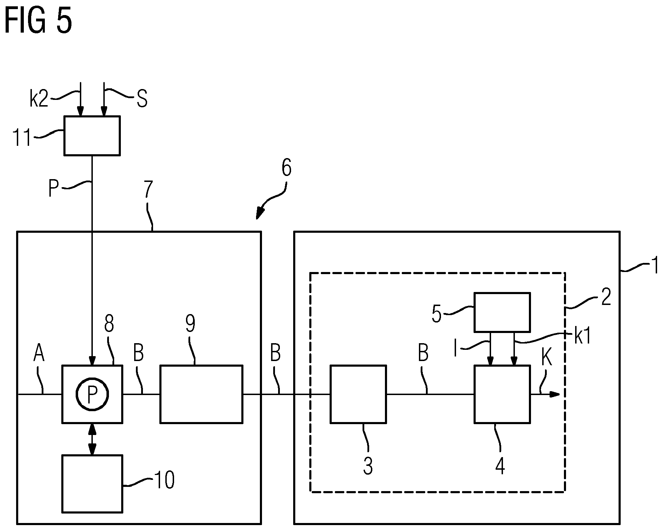

Insgesamt ist der homomorphen Verschlüsselungsfunktion f ein Schlüsselpaar aus dem privaten Schlüssel k1 und einem öffentlichen Schlüssel k2 zugeordnet. Der öffentliche Schlüssel k2 wird beispielsweise zur Transformation eines Programms S eingesetzt(siehe dazu Fig. 5). Das Entschlüsselungsmittel 4 gibt ausgangsseitig die entschlüsselten Berechnungsdaten K als Klartext aus. Die entschlüsselten Berechnungsdaten K können beispielsweise auf einer Anzeigevorrichtung (nicht gezeigt) angezeigt werden oder für ein weiteres Programm oder eine Applikation verwendet werden.

Alternativ hierzu kann das Entschlüsselungsmittel 4 auch fest verdrahtet ausgebildet sein.

Fig. 2 zeigt ein Blockschaltbild eines zweiten Ausführungsbeispiels einer Entschlüsselungsvorrichtung 1. Die Entschlüsselungsvorrichtung 1 der Fig. 2 basiert auf der Entschlüsselungsvorrichtung 1 der Fig. 1 und weist sämtliche Merkmale der Fig. 1 auf. Darüber hinaus hat die Entschlüsselungsvorrichtung 1 der Fig. 2 ein Speichermittel 5, welches dazu eingerichtet ist, ein Programm zu Berechnung der Inversen I der homomorphen Verschlüsselungsfunktion f zu speichern und dieses dem Entschlüsselungsmittel 4 bereitzustellen. Ferner speichert das Speichermittel 5 den der homomorphen Verschlüsselungsfunktion f zugeordneten privaten Schlüssel k1 und stellt diesen dem Entschlüsselungsmittel 4 bereit.

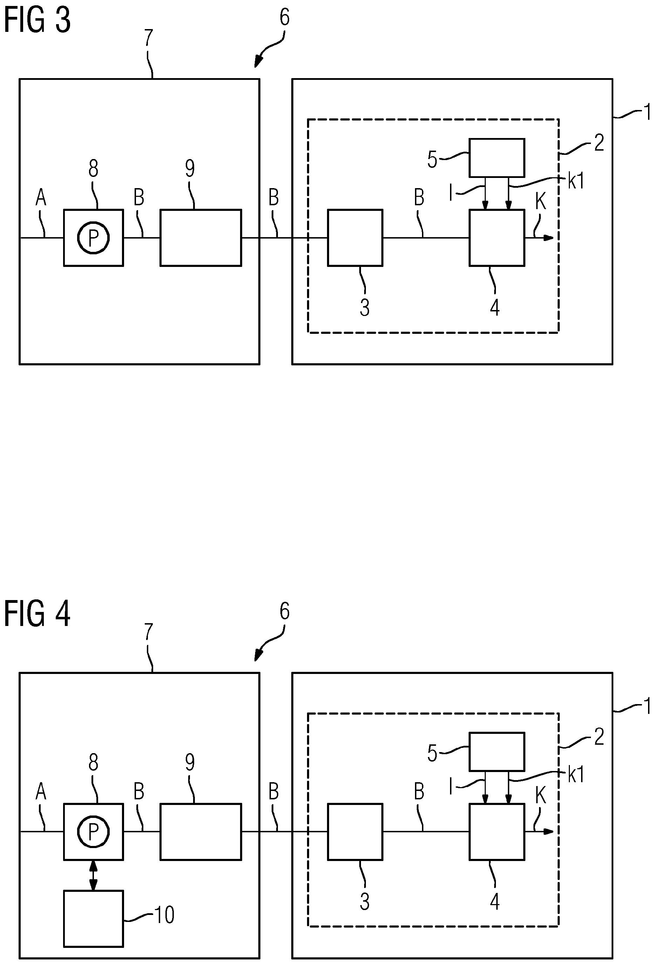

In Fig. 3 ist ein Blockschaltbild eines ersten Ausführungsbeispiels eines Systems 6 mit einer Berechnungseinrichtung 7 und einer Entschlüsselungsvorrichtung 1 dargestellt. Beispielsweise ist die Berechnungseinrichtung 7 ein ungeschütztes Computer-System, wohingegen die Entschlüsselungsvorrichtung 1 ein kryptographisch und/oder physikalisch geschützter Sicherheits-Token ist.

Die Berechnungseinrichtung 7 hat ein Anwendungsmittel 8, welches dazu eingerichtet ist, das transformierte Programm P auf Eingangsdaten A zur Bereitstellung der verschlüsselten Berechnungsdaten B anzuwenden. Das Anwendungsmittel 8 stellt die berechneten Berechnungsdaten B einem Übertragungsmittel 9 der Berechnungseinrichtung 7 bereit. Das Übertragungsmittel 9 ist dazu eingerichtet, die verschlüsselten Berechnungsdaten B der Entschlüsselungsvorrichtung 1 bereitzustellen. Das Übertragungsmittel 9 der Einrichtung 7 und das Empfangsmittel 3 der Vorrichtung 1 sind dazu eingerichtet, ein vorbestimmtes Schnittstellenprotokoll zur Übertragung der verschlüsselten Berechnungsdaten B auszuführen.

Die Entschlüsselungsvorrichtung 1 entspricht der Vorrichtung 1 der Fig. 2. Demnach empfängt das Empfangsmittel 8 die übertragenen verschlüsselten Berechnungsdaten B und stellt diese dem Entschlüsselungsmittel 4 bereit.

Die Berechnungseinrichtung 7 ist im Gegensatz zur Entschlüsselungsvorrichtung 1 dazu geeignet, das transformierte Programm P innerhalb einer vorbestimmten Zeitdauer vollständig auszuführen. Die Berechnungseinrichtung 7 hat eine deutlich höhere Rechenleistung sowie eine deutlich höhere Speicherkapazität als die Entschlüsselungsvorrichtung 1. Folglich wird bei dem System 6 die Rechenleistung der Berechnungseinrichtung 7 zur Anwendung des transformierten Programms P genutzt, wohingegen hinsichtlich der Sicherheit die Entschlüsselungsvorrichtung 1 verwendet wird.

In Fig. 4 ist ein Blockschaltbild eines zweiten Ausführungsbeispiels eines Systems 6 mit einer Berechnungseinrichtung 7 und einer Entschlüsselungsvorrichtung 1 dargestellt. Das zweite Ausführungsbeispiel der Fig. 4 basiert auf dem ersten Ausführungsbeispiel der Fig. 3 und weist sämtliche Merkmale des ersten Ausführungsbeispiels der Fig. 3 auf. Darüber hinaus hat die Berechnungseinrichtung 7 der Fig. 4 ein Schutzmittel 10. Das Schutzmittel 10 ist dazu eingerichtet, das transformierte Programm P vor Manipulationen zu schützen. Dabei kann das Schutzmittel 10 insbesondere einen Nachweis über die korrekte Ausführung des transformierten Programms P durch das Anwendungsmittel 8 erstellen. Hierbei werden vorzugsweise Probabilistically-Checkable-Proofs (PCP) eingesetzt.

Fig. 5 zeigt ein Blockschaltbild eines dritten Ausführungsbeispiels eines Systems 6 mit einer Berechnungseinrichtung 7 und einer Entschlüsselungsvorrichtung 1. Das dritte Ausführungsbeispiel der Fig. 5 basiert auf dem zweiten Ausführungsbeispiel der Fig. 4 und weist sämtliche Merkmale des zweiten Ausführungsbeispiels der Fig. 4 auf. Darüber hinaus hat das System 6 der Fig. 5 ein Transformationsmittel 11. Das Transformationsmittel 11 ist dazu eingerichtet, ein Programm S zur Berechnung der Berechnungsdaten in das transformierte Programm P zu transformieren, welches von dem Anwendungsmittel 8 eingesetzt wird. Zu dieser Transformation verwendet das Transformationsmittel 11 die homomorphe Verschlüsselungsfunktion f unter Verwendung des öffentlichen Schlüssels k2.

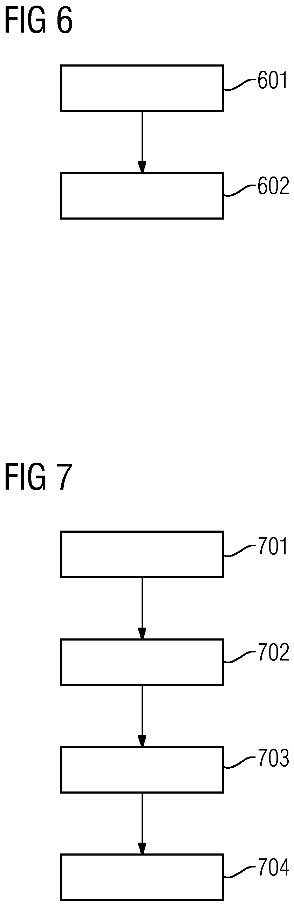

Fig. 6 illustriert ein Ablaufdiagramm eines ersten Ausführungsbeispiels eines Verfahrens zum Entschlüsseln von Daten mittels einer gesicherten Vorrichtung 1, die auch als Entschlüsselungsvorrichtung 1 bezeichnet werden kann. Die Entschlüsselungsvorrichtung 1 ist beispielsweise gemäß der Fig. 1 oder 2 ausgebildet.

In Schritt 601 werden verschlüsselte Berechnungsdaten B von der Entschlüsselungsvorrichtung 1 empfangen. Die verschlüsselten Berechnungsdaten B sind durch eine homomorphe Verschlüsselungsfunktion f verschlüsselt.

In Schritt 602 werden die verschlüsselten Berechnungsdaten B durch Ausführung der Inversen I der homomorphen Verschlüsselungsfunktion f auf die verschlüsselten Berechnungsdaten B unter Verwendung eines der homomorphen Verschlüsselungsfunktion f zugeordneten privaten Schlüssels k1 entschlüsselt.

In Fig. 7 ist ein Ablaufdiagramm eines zweiten Ausführungsbeispiels eines Verfahrens zum Entschlüsseln von Daten durch eine gesicherte Entschlüsselungsvorrichtung 1 dargestellt.

In Schritt 701 wird ein Programm S zur Berechnung der Berechnungsdaten mittels einer homomorphen Verschlüsselungsfunktion f unter Verwendung eines der homomorphen Verschlüsselungsfunktion f zugeordneten öffentlichen Schlüssels k2 in ein transformiertes Programm P transformiert.

In Schritt 702 wird das transformierte Programm P auf Eingangsdaten A zur Bereitstellung verschlüsselter Berechnungsdaten B angewendet.

In Schritt 703 werden die verschlüsselten Berechnungsdaten B an die Entschlüsselungsvorrichtung 1 übertragen.

In Schritt 704 werden die verschlüsselten Berechnungsdaten B mittels der Entschlüsselungsvorrichtung 1 entschlüsselt. Dazu wird die Inverse I der homomorphen Verschlüsselungsfunktion f auf die verschlüsselten Berechnungsdaten B unter Verwendung des der homomorphen Verschlüsselungsfunktion f zugeordneten privaten Schlüssels k1 angewendet. Die entschlüsselten Berechnungsdaten B liegen dann als entschlüsselte Berechnungsdaten K im Klartext vor.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Literaturverzeichnis

[1] Craig Gentry: A Fully Homomorphic Encryption Scheme, Dissertation, Stanford University, September 2009
[2] Nigel P. Smart, Frederik Vercauteren: Fully Homomorphic Encryption with Relatively Small Key and Ciphertext Sizes, Public Key Cryptography 2010, Lecture Notes in Computer Science 6056, p. 420-443, Springer 2010
[3] Marten van Dijk, Craig Gentry, Shai Halevi, Vinod Vaikuntanathan: Fully Homomorphic Encryption over the Integers, Advances in Cryptography, EUROCRYPT 2010, Lecture Notes in Computer Science 6110, p. 24-43, Springer 2010
[4] Craig Gentry, Shai Halevi: Fully Homomorphic Encryption without Squashing Using Depth-3 Arithemtic Circuits, FOCS 2011
[5] Sanjeev Arora, Shmuel Safra: Probabilistic Checking of Proofs: A New Characterization of NP, Journal of the ACM, 45(1):70-122, 1998
[6] Ingrid Biehl, Bernd Meyer, Susanne Wetzel: Ensuring the Integrity of Agent-Based Computation by Short Proofs, Mobile Agents 1998, Lecture Notes in Computer Science 1477, p. 183-194, Springer 1999
[7] William Aiello, Sandeep N. Bhatt, Rafail Ostrovsky, Sivaramakrishnan Rajagopalan: Fast Verification of Any Remote Procedure Call: Short Witness-Indistinguishable One-Round Proofs for NP, Automata, Languages and Programming, International Colloquium ICALP 2000, Lecture Notes in Computer Science 1853, p. 463-474, Springer 2000

## Patentansprüche

1. System (6), mit:
einer Einrichtung (7), welche ein Anwendungsmittel (8) zum Anwenden eines mittels einer homomorphen Verschlüsselungsfunktion (f) transformierten Programms (P) auf Eingangsdaten (A) zur Bereitstellung von verschlüsselten Berechnungsdaten (B) und ein Übertragungsmittel (9) zum Übertragen der verschlüsselten Berechnungsdaten (B) aufweist, wobei die Einrichtung (7) ein ungeschützter Rechner oder ein ungeschützter Server ist, und
einer Vorrichtung (1) zum Entschlüsseln von Daten aufweisend eine Anzahl von durch zumindest eine Sicherungseinrichtung (2) gesicherten Mitteln (3-5), welche ein Empfangsmittel (3) und ein Entschlüsselungsmittel (4) umfassen,
wobei das Empfangsmittel (3) zum Empfangen der mittels der homomorphen Verschlüsselungsfunktion (f) verschlüsselten Berechnungsdaten (B) eingerichtet ist, und
wobei das Entschlüsselungsmittel (4) zum Entschlüsseln der verschlüsselten Berechnungsdaten (B) durch Ausführung der Inversen (I) der homomorphen Verschlüsselungsfunktion (f) auf die verschlüsselten Berechnungsdaten (B) unter Verwendung eines der homomorphen Verschlüsselungsfunktion (f) zugeordneten privaten Schlüssels (k1) eingerichtet ist, wobei die Vorrichtung (1) ein Sicherheits-Token, ein USB-Token oder eine Smart-Card ist,
wobei die Einrichtung (7) derart mit Ressourcen ausgestattet ist, um das transformierte Programm (P) innerhalb einer vorbestimmten Zeitdauer vollständig auszuführen, in welcher die Vorrichtung (1) das transformierte Programm (P) nicht vollständig ausführen kann, wobei die Vorrichtung (1) eine geringere Rechenleistung und eine geringere Speicherkapazität als die Einrichtung (7) hat.

2. System nach Anspruch 1,
**dadurch gekennzeichnet,**
**dass** das Übertragungsmittel (9) der Einrichtung (7) und das Empfangsmittel (3) der Vorrichtung (1) dazu eingerichtet sind, ein vorbestimmtes Schnittstellenprotokoll zur Übertragung der verschlüsselten Berechnungsdaten (B) auszuführen.

3. System nach Anspruch 1,
**dadurch gekennzeichnet,**
**dass** die Einrichtung (7) ein Schutzmittel (10) aufweist, welches dazu eingerichtet ist, das transformierte Programm (P) vor Manipulation zu schützen.

4. System nach Anspruch 3,
**dadurch gekennzeichnet,**
**dass** das Schutzmittel (10) dazu eingerichtet ist, einen Nachweis über die korrekte Ausführung des transformierten Programms (P) durch das Anwendungsmittel (8), insbesondere mittels Probabilistically-Checkable-Proofs (PCP), zu erstellen.

5. System nach einem der Ansprüche 1 bis 4,
**dadurch gekennzeichnet,**
**dass** ein Transformationsmittel (11) zur Transformation eines Programms (S) zur Berechnung der Berechnungsdaten mittels der homomorphen Verschlüsselungsfunktion (f) unter Verwendung eines der homomorphen Verschlüsselungsfunktion (f) zugeordneten öffentlichen Schlüssels (k2) in das transformierte Programm (P) vorgesehen ist.

## Claims

1. System (6) having:
a device (7) having an application means (8) for applying a program (P) transformed by means of a homomorphic encryption function (f) to input data (A) in order to provide encrypted calculation data (B) and a transmission means (9) for transmitting the encrypted calculation data (B), the device (7) being an unprotected computer or an unprotected server,
and
an apparatus (1) for decrypting data, having a number of means (3-5) which are secured by at least one security device (2) and comprise a receiving means (3) and a decrypting means (4), the receiving means (3) being set up to receive the calculation data (B) encrypted by means of the homomorphic encryption function (f), and
the decrypting means (4) being set up to decrypt the encrypted calculation data (B) by carrying out the inverse (I) of the homomorphic encryption function (f) on the encrypted calculation data (B) using a private key (k1) assigned to the homomorphic encryption function (f), the apparatus (1) being a security token, a USB token or a smartcard,
the device (7) being equipped with resources in order to completely execute the transformed program (P) within a predetermined period in which the apparatus (1) cannot completely execute the transformed program (P), the apparatus (1) having a lower computation power and a lower storage capacity than the device (7).

2. System according to Claim 1,
**characterized in that**
the transmission means (9) of the device (7) and the receiving means (3) of the apparatus (1) are set up to carry out a predetermined interface protocol for transmitting the encrypted calculation data (B).

3. System according to Claim 1,
**characterized in that**
the device (7) has a protection means (10) which is set up to protect the transformed program (P) from tampering.

4. System according to Claim 3,
**characterized in that**
the protection means (10) is set up to provide proof of the correct execution of the transformed program (P) by the application means (8), in particular using probabilistically checkable proofs (PCP).

5. System according to one of Claims 1 to 4,
**characterized in that**
a transformation means (11) is provided for transforming a program (S) for calculating the calculation data into the transformed program (P) by means of the homomorphic encryption function (f) using a public key (k2) assigned to the homomorphic encryption function (f).

## Revendications

1. Système (6) comprenant :
un dispositif (7) comportant un moyen d'application (8) pour appliquer un programme (P), transformé au moyen d'une fonction de cryptage homomorphe (f), à des données d'entrée (A) pour fournir des données de calcul (B) cryptées et un moyen de transmission (9) pour transmettre les données de calcul (B) cryptées, ledit dispositif (7) étant un ordinateur non protégé ou un serveur non protégé, et
un dispositif (1) de décryptage de données, comportant un certain nombre de moyens (3-5) sécurisés par au moins un dispositif de sécurisation (2), lesquels moyens comprennent un moyen de réception (3) et un moyen de décryptage (4),
le moyen de réception (3) étant adapté pour recevoir les données de calcul (B) cryptées au moyen de la fonction de cryptage homomorphe (f), et
le moyen de décryptage (4) étant adapté pour décrypter les données de calcul (B) cryptées, par application de la fonction inverse (I) de la fonction de cryptage homomorphe (f) aux données de calcul (B) cryptées, à l'aide d'une clé privée (k1) associée à la fonction de cryptage homomorphe (f), ledit dispositif (1) étant un jeton de sécurité, un jeton USB ou une smartcard,
le dispositif (7) étant doté de ressources permettant d'exécuter intégralement le programme transformé (P) dans un intervalle de temps prédéterminé dans lequel le dispositif (1) ne peut pas exécuter intégralement ledit programme transformé (P), le dispositif (1) ayant une puissance de calcul et une capacité de stockage plus faibles que le dispositif (7).

2. Système selon la revendication 1,
**caractérisé en ce que**
le moyen de transmission (9) du dispositif (7) et le moyen de réception (3) du dispositif (1) sont adaptés pour exécuter un protocole d'interface prédéterminé pour la transmission des données de calcul (B) cryptées.

3. Système selon la revendication 1,
**caractérisé en ce que**
le dispositif (7) comporte un moyen de protection (10) adapté pour protéger le programme transformé (P) contre toute manipulation.

4. Système selon la revendication 3,
**caractérisé en ce que**
le moyen de protection (10) est adapté pour établir une preuve de l'exécution correcte du programme transformé (P) par le moyen d'application (8), en particulier au moyen de probabilistically checkable proofs (PCP).

5. Système selon l'une des revendications 1 à 4,
**caractérisé en ce que**
il est prévu un moyen de transformation (11) pour transformer un programme (S) de calcul des données de calcul au moyen de la fonction de cryptage homomorphe (f), à l'aide d'une clé publique (k2) associée à la fonction de cryptage homomorphe (f), en programme transformé (P).
